# EUROPÄISCHE PATENTSCHRIFT

(11) **EP 2 403 087 B1**
(45) Veröffentlichungstag und Bekanntmachung des Hinweises auf die Patenterteilung: **10.08.2016**
(21) Anmeldenummer: 10290351.5
(22) Anmeldetag: 30.06.2010
(51) Int. Cl.: H02G 15/25

(54) **Anordnung zum Verbinden von zwei papierisolierten Hochspannungskabeln**
Arrangement for connecting two paper-insulated high voltage cables
Arrangement pour relier deux câbles à haute tension isolés au papier

(43) Veröffentlichungstag der Anmeldung: 04.01.2012
(73) Patentinhaber: Nexans, 75008 Paris (FR)
(72) Erfinder: Aue, Volker, Dipl.-Ing., 44137 Dortmund (DE); Niehoff, Jörg, Dipl.-Ing., 30519 Hannover (DE)
(74) Vertreter: Döring, Roger

(56) Entgegenhaltungen:
- EP-A1- 2 182 602
- US-A- 2 967 901

## Beschreibung

Die Erfindung bezieht sich auf eine Anordnung zum Verbinden von zwei papierisolierten Hochspannungskabeln, wie sie beispielsweise in der Druckschrift "Electric Cables Handbook" der Firma BICC Cables, 3. Auflage, 1997, Seiten 513 und 514 beschrieben ist.

Eine derartige Anordnung wird beispielsweise benötigt, um bereits verlegte und noch im Einsatz befindliche papierisolierte Hochspannungskabel, deren Papierisolierung mit einem fließfähigen Isoliermedium imprägniert ist, miteinander zu verbinden. Als Isoliermedium können in bekannter Technik Öl oder Gas, beispielsweise Stickstoff, eingesetzt werden. Es kann sich bei den Hochspannungskabeln um Gasaußendruckkabel, Gasinnendruckkabel, Niederdruckölkabel oder Hochdruckölkabel handeln. Stellvertretend für alle möglichen Ausführungsformen wird im folgenden das Wort "Papierkabel" verwendet.

Bei der Anordnung nach dem eingangs erwähnten "Electric Cables Handbook" weisen die beiden Papierkabel an den für ihre elektrisch leitende Verbindung vorgesehenen Enden jeweils einen beispielsweise aus Epoxyharz bestehenden Schottisolator auf, der zum druckdichten Verschießen des jeweiligen Papierkabels dient. Der Schottisolator ist unter Einschluß eines umlaufenden Ringspalts zum Durchlaß des Isoliermediums um das jeweilige Kabelende herumgeformt. Er hat als wirksamer Endverschluß einen relativ großen Außendurchmesser, durch welchen auch große Abmessungen der herzustellenden äußeren Isolierung sowie eines umhüllenden metallischen Druckgehäuses bedingt sind. Ein in dem Druckgehäuse vorhandenes zusätzliches Volumen an fließfähigem Isoliermedium ist beträchtlich und erfordert zusätzliche Maßnahmen zur Drucküberwachung und zum Aufrechterhalten des Drucks.

Aus der EP 2 182 602 A1 geht eine Vorrichtung für eine Verbindungsstelle zwischen einem papierisolierten, mit einem fließfähigen Isoliermedium imprägnierten elektrischen Hochspannungskabel und einem kunststoffisolierten elektrischen Hochspannungskabel hervor. Die Verbindungsstelle ist von einem Muffenkörper aus elastischem Isoliermaterial umgeben, der ein Durchgangsloch zur Aufnahme der Enden der beiden zu verbindenden Kabel hat. An den beiden Enden des Durchgangslochs sind in demselben elektrische Steuertrichter angebracht. Die Innendurchmesser des Durchgangslochs sind an dessen beiden Enden zur Anpassung an die unterschiedlichen Außendurchmesser der beiden Kabel, die mindestens um 10 mm differieren, unterschiedlich bemessen.

Die US 2 967 901 A beschreibt eine Verbindungsstelle zwischen zwei ölgefüllten elektrischen Kabeln, deren Leiter an ihren Enden mit Hülsen aus Metall bestückt sind. Beide Leiterenden sind innerhalb einer Verbindungsmuffe in einen Metallkörper eingesteckt und durch denselben elektrisch leitend verbunden. Der Metallkörper ist in ein Dielektrikum eingebettet, das sich jeweils bis über das Ende der beiden Kabel erstreckt. Es besteht beispielsweise aus einem synthetischen, ausgehärteten Material.

Der Erfindung liegt die Aufgabe zugrunde, die eingangs geschilderte Anordnung einfacher und so zu gestalten, daß ihre Abmessungen verringert werden können.

Diese Aufgabe wird entsprechend der Gesamtheit aller Merkmale des Patentanspruchs 1 gelöst.

Die radialen Abmessungen der Verbindungsstelle zwischen den beiden Papierkabeln werden bei dieser Anordnung von den Außendurchmessern der beiden als Schottisolatoren dienenden Kunststoffkörper bestimmt. Der einteilige, elastische Muffenkörper liegt in Montageposition an den beiden Kunststoffkörpern an, so daß seine radialen Abmessungen klein gehalten werden können. Jedes der beiden Papierkabel ist durch das Zusammenwirken von metallischem Anschlußelement, Dichtungselement, Koppelelektrode und Kunststoffkörper gegenüber seinem Isoliermedium abgedichtet, und zwar innerhalb der durch den Kunststoffkörper definierten radialen Abmessungen. Da auf diese Weise jedes Papierkabel für sich abgedichtet ist, wird eine zusätzliche Abdichtung der beiden Papierkabel gegeneinander nicht benötigt. Ein zusätzliches fließfähiges Isoliermedium ist ebenfalls nicht erforderlich.

Durch den Einsatz des einteiligen, elastischen äußeren Muffenkörpers können die beiden Papierkabel außerdem auf einfache Art und Weise miteinander verbunden werden. Der Muffenkörper kann mit üblichen Bauteilen, wie die innen liegende Abschirmelektrode und je ein Steuertrichter an ihren axialen Enden, als einteiliges Gebilde vorgefertigt werden, so daß er werkseitig auf seine elektrische Funktionsfähigkeit geprüft werden kann. Die elektrische Verbindung der Leiter der beiden Papierkabel ist durch die beiden Anschlußelemente und den dicht an denselben anliegenden Metallring, der andererseits dicht an der Abschirmelektrode anliegt, auf einfache aber wirksame Art und Weise sichergestellt. Mit den an beiden Enden befindlichen Steuertrichtern wird der Muffenkörper in Montageposition mit definierter Kraft gegen die äußeren elektrisch leitfähigen Schichten der beiden Kunststoffkörper gepreßt, die denselben zumindest abschnittsweise umgeben. Dadurch kann der Muffenkörper Temperaturschwankungen unbeschadet folgen, wie sie im Betrieb einer Kabelstrecke auftreten. Hinzu kommt, daß durch den einteiligen Muffenkörper kein zusätzliches Isoliermedium mit zugehörigen Überwachungseinrichtungen benötigt wird.

Ein Ausführungsbeispiel des Erfindungsgegenstandes ist in den Zeichnungen dargestellt.

Es zeigen:
Fig. 1 schematisch den grundsätzlichen Aufbau einer Verbindungsstelle zwischen zwei Hochspannungskabeln im Schnitt.
Fig. 2 einen Schnitt durch eine Anordnung nach der Erfindung.

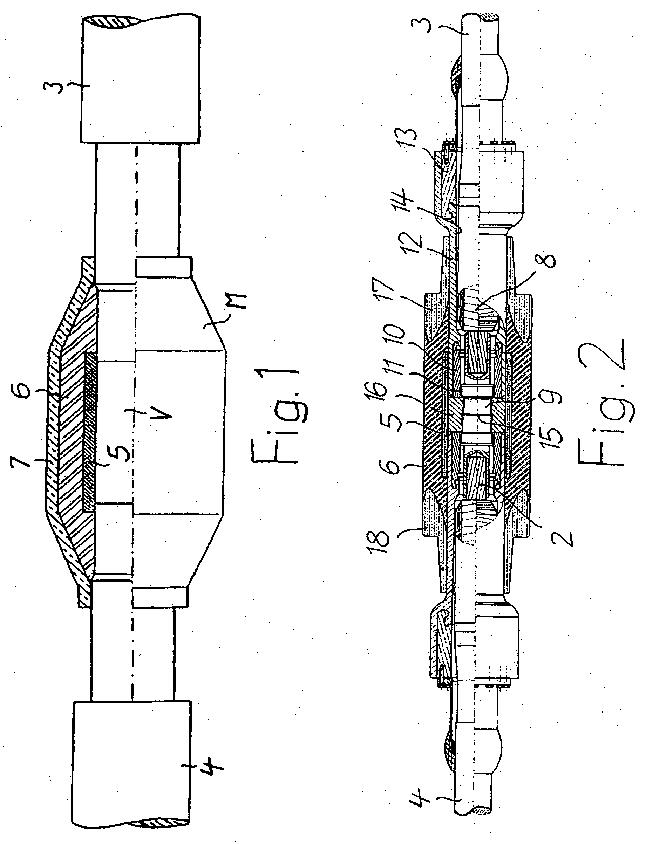

Da die beiden miteinander zu verbindenden papierisolierten Hochspannungskabel - im folgenden weiter kurz "Papierkabel" genannt - an ihren Enden in identischer Art und Weise behandelt werden, wird die Vorbereitung dieser Enden zur Herstellung der Anordnung nach der Erfindung gemäß Fig. 2 nur für eines der Papierkabel beschrieben.

Die aus Fig. 2 ersichtlichen Leiter 1 und 2 zweier Papierkabel 3 und 4 sind in einer Verbindungsstelle V, deren genauerer Aufbau aus Fig. 2 hervorgeht, elektrisch leitend miteinander verbunden. Über der Verbindungsstelle V ist eine Verbindungsmuffe M angebracht, die einen als vorgefertigtes Bauteil ausgeführten, mit einer innen liegenden, elektrisch leitfähigen Abschirmelektrode 5 ausgerüsteten Muffenkörper 6 aus elastischem Isoliermaterial aufweist, auf dem eine leitfähige äußere Beschichtung 7 angebracht sein kann. Die Beschichtung 7 hat elektrisch leitenden Kontakt mit äußeren elektrisch leitenden Schichten der beiden Papierkabel 3 und 4. Der Muffenkörper 6 welcher ein durchgehendes Durchgangsloch mit vorzugsweise gleichbleibender lichter Weite hat, sitzt im Montagezustand mit Preßsitz auf den von ihm umschlossenen Teilen.

Die elektrischen Leiter 1 und 2 der beiden Papierkabel 3 und 4 können mehrdrähtig oder massiv sein. Sie können rund oder segmentförmig ausgeführt sein und aus Kupfer oder Aluminium bestehen. Die Leiter 1 und 2 sind in bekannter Technik jeweils von einer auch als Leiterglättung bezeichneten inneren Leitschicht umgeben ist. Diese innere Leitschicht ist in der Zeichnung nicht mit dargestellt.

Das Papierkabel 3 weist ebenso wie das Papierkabel 4 einen nicht mit dargestellten äußeren, aus Metall bestehenden Mantel auf. Das Ende der Isolierung des Papierkabels 3 ist durch Papierlagen 8 aufgedickt. Am Ende seines von allen umgebenden Schichten befreiten und damit blanken Leiters 1 ist ein metallisches Anschlußelement 9 befestigt, das den Leiter 1 mit seinem einen Ende hülsenartig umgibt. Es besteht mit Vorteil aus dem gleichen Material wie der Leiter 1, vorzugsweise aus Kupfer. Das Anschlußelement 9 hat mit Vorteil an seinem anderen Ende eine plane äußere Stirnfläche. Das Anschlußelement 9 ist im Bereich des Leiters 1 von einer rohrartigen Koppelelektrode 10 umgeben, die koaxial zum Anschlußelement 9 verläuft und durch einen Spalt von demselben getrennt ist. In dem Spalt zwischen Anschlußelement 9 und Koppelelektrode 10 ist ein Dichtungselement 11 angebracht, durch welches der Spalt hermetisch abgedichtet ist. Als Dichtungselement 11 ist mit Vorteil mindestens ein O-Ring angebracht.

Das Ende des Papierkabels 3 ist zur Bildung eines Endverschlusses von einem beispielsweise aus Epoxyharz bestehenden und als Schottisolator dienenden Kunststoffkörper 12 rundum umgeben. Die Koppelelektrode 10 ist im Wege der Vorfertigung flüssigkeits- und gasdicht in den Kunststoffkörper 12 eingegossen. Am anderen Ende des Kunststoffkörpers 12 ist auch im Wege der Vorfertigung ebenfalls flüssigkeits- und gasdicht eine Metallhülse 13 eingegossen, an die ein mit dem Mantel des Papierkabels 3 verbundener Trichter geschraubt ist. Koppelelektrode 10, Kunststoffkörper 12 und Metallhülse 13 sind zusammen ein vorgefertigtes Bauteil, das beim Aufbau der Verbindungsanordnung auf das Ende des Papierkabels 3 aufgeschoben wird. Dabei verbleibt zwischen dem Kunststoffkörper 12 und den von demselben umgebenen Teilen des Papierkabels 3 ein umlaufender Spalt 14 zum Durchtritt des Isoliermediums, beispielsweise eines Isolieröls. Die äußere Oberfläche des Kunststoffkörpers 12 ist zumindest abschnittsweise mit einer elektrisch leitfähigen Schicht versehen, mit Vorteil in Bereich der Metallhülse 13.

In der fertig montierten Anordnung liegen die beiden metallischen Anschlußelemente 9 mit ihren Stirnflächen an der Stelle 15 aneinander. Sie sind von einem aus elektrisch gut leitendem Material, vorzugsweise Kupfer, bestehenden Metallring 16 umgeben. Der Metallring 16 liegt dicht an den Anschlußelementen 9 an und stellt deren elektrisch leitende Durchverbindung sicher. Der Außendurchmesser des Metallrings 16 entspricht dem Außendurchmesser der Kunststoffkörper 12. Der Metallring 16 liegt im montierten Zustand dicht an der Anschirmelektrode 5 an.

Die ganze Verbindungsstelle zwischen den beiden Papierkabeln 3 und 4 ist von dem Muffenkörper 6 aus elastischem, vorzugsweise aus dauerelastischem Isoliermaterial umgeben. Der Muffenkörper 6 besteht ebenso wie die Abschirmelektrode 5 mit Vorteil aus einem Ethylen-Propylen-Terpolymer (EPDM) oder aus Silikongummi. An den beiden axialen Enden des Muffenkörpers 6 ist je ein Steuerrichter 17 bzw. 18 angebracht, der mit Vorteil in den Muffenkörper 6 integriert ist. Sie bestehen vorzugsweise aus dem gleichen Material wie der Muffenkörper 6 und sind elektrisch leitfähig gemacht. Die Steuertrichter 17 und 18 liegen in Montageposition mit definiertem Preßsitz an der jeweiligen elektrisch leitenden äußeren Schicht der Kunststoffkörper 12 der beiden Papierkabel 3 und 4 an.

Bei der Montage der Anordnung nach der Erfindung wird beispielsweise wie folgt vorgegangen:
Nach Vorbereitung der Enden der beiden zu verbindenden Papierkabel 3 und 4 entsprechend der vorangehenden Beschreibung werden dieselben von zwei einander gegenüber liegenden Seiten in den vorgefertigten äußeren Muffenkörper 6 hineingesteckt, bis ihre metallischen Anschlußelemente 9 mit ihren Stirnflächen an der Stelle 15 aneinander liegen. In dieser Position sind sie zu ihrer elektrisch leitenden Verbindung von dem Metallring 16 umgeben, der vorher auf eines der Anschlußelemente 9 aufgesteckt worden sein kann. Er kann aber auch als Einzelteil vorab in dem Muffenkörper 6 angeordnet werden.

Da der äußere Muffenkörper 6 aus elastischem Isoliermaterial besteht, wird er zweckmäßig so dimensioniert, daß sein Durchgangsloch eine gegenüber dem Außendurchmesser der Kunststoffmäntel 12 etwas kleinere lichte Weite hat. Der Muffenkörper 6 wird dann beim Einstecken der Enden der beiden Papierkabel 3 und 4 etwas aufgeweitet. Er sitzt dadurch abschließend mit Preßsitz auf den umschlossenen Teilen. Das gilt insbesondere auch für die Steuertrichter 17 und 18, die fest an den elektrisch leitfähigen Schichten der Kunststoffkörper 12 anliegen.

Nach abgeschlossener Montage des Muffenkörpers 6 kann über demselben eine äußere Umhüllung angebracht werden. Die im Aufbau der Papierkabel 3 und 4 vorhandenen elektrisch leitenden Schirme können in einer solchen Umhüllung durchverbunden werden. Statt dieser Art der Umhüllung kann um den äußeren Muffenkörper 6 auch ein Metallgehäuse mit Isoliermantel herum angebracht werden.

## Patentansprüche

1. Anordnung zum Verbinden von zwei papierisolierten Hochspannungskabeln, die mit einem fließfähigen Isoliermedium imprägniert sind, bei welcher
- an den zu verbindenden Enden der beiden Hochspannungskabel (3,4) jeweils ein von einem druckfesten Schottisolator umgebener Endenabschluß angebracht ist,
- die Verbindungsstelle der beiden Leiter (1, 2) von einem aus Isoliermaterial bestehenden äußeren Muffenkörper (6) umgeben ist,
- über der Verbindungsstelle der Leiter (1, 2) der beiden Hochspannungskabel (3, 4) eine Abschirmelektrode (5) aus elektrisch leitfähig gemachtem Ethylen-Propylen-Terpolymer bzw. Silikongummi angebracht ist,
- auf den Enden der Leiter (1,2) der beiden Hochspannungskabel (3,4) jeweils ein mit einer planen Stirnfläche versehenes metallisches Anschlußelement (9) elektrisch leitend befestigt ist, wobei die beiden Anschlußelemente (9) in Montageposition mit ihren Stirnflächen aneinander liegen,
- die beiden Anschlußelemente (9) im Montagezustand durch einen dieselben dicht umgebenden Metallring (16) elektrisch leitend miteinander verbunden sind, der mit seiner Außenfläche dicht an der Abschirmelektrode (5) anliegt,
- jedes Anschlußelement (9) von einer koaxial zu demselben verlaufenden und einen umlaufenden Spalt mit demselben einschließenden, rohrartigen Koppelelektrode (10) umgeben ist,
- zwischen der Koppelelektrode (10) und dem Anschlußelement (9) jeweils ein Dichtungselement (11) angebracht ist,
- um die Enden der beiden Hochspannungskabel (3,4) herum jeweils ein als Schottisolator dienender, außen zumindest abschnittsweise mit einer elektrisch leitfähigen Schicht versehener Kunststoffkörper (12) angebracht ist, der sich bis über die jeweilige Koppelelektrode (10) erstreckt, welche mit ihrem dem jeweiligen Hochspannungskabel (3,4) zugewandten axialen Ende in dem Kunststoffkörper (12) verankert ist, und
- der aus elastisch verformbarem Material bestehende Muffenkörper (6) einteilig ausgeführt ist und an den beiden Kunststoffkörpern (12) anliegt.

2. Anordnung nach Anspruch 1, **dadurch gekennzeichnet,**
- **daß** die zu verbindenden Enden der beiden Hochspannungskabel (3,4) von den als Schottisolatoren dienenden Kunststoffkörpern (12) so umgeben sind, daß ihre jeweiligen das fließfähige Isoliermedium umgebenden Druckräume hydraulisch von einander sind, und
- **daß** die beiden Kunststoffkörper (12) in Verbindung mit dem äußeren Muffenkörper (6) eine spannungsfeste Umhüllung der Verbindungsstelle der beiden Hochspannungskabel (3,4) bilden.

3. Anordnung nach Anspruch 1 oder 2, **dadurch gekennzeichnet, daß** der äußere Muffenkörper (6) aus einem Ethylen-Propylen-Terpolymer oder aus Silikongummi besteht.

4. Anordnung nach einem der Ansprüche 1 bis 3, **dadurch gekennzeichnet, daß** die axialen Enden des äußeren Muffenkörpers (6) zur Bildung von Steuertrichtern (17, 18) aus elektrisch leitfähig gemachtem Ethylen-Propylen-Terpolymer bzw. Silikongummi bestehen.

## Claims

1. Arrangement for the connection of two paper insulated high voltage cables which are impregnated by a fluid insulating medium, wherein
- at the ends of the two high voltage cables (3,4) which are to be connected a termination is provided which is surrounded by a barrier insulator respectively,
- the connecting area of the two conductors (1,2) is surrounded by an outer joint sleeve (6) of insulating material,
- the connecting point of the conductors (1,2) of the two high voltage cables (3,4) is surrounded by a screening electrode (5) of a material of ethylene-propylene-terpolymer or silicone rubber which is made electrically conducting,
- at the ends of the conductors (1,2) of the two high voltage cables (3,4) a metallic connecting element (9) is fastened respectively, which has a plane endface, the two connecting elements (9) abutting to each other with their endfaces in mounting position,
- the two connecting elements (9) are electrically connected to each other in mounting position by a metal ring (16) which surrounds the same in a close manner and which abuts to the screening electrode (5) with its outer surface,
- each connecting element (9) is surrounded coaxially by a tube like coupling electrode (10), including a space to the connecting element,
- a sealing element (11) is placed between the connecting element (9) and the coupling electrode (10) respectively,
- the ends of the two high voltage cables (3,4) are surrounded by a plastic body (12) respectively serving as a barrier insulator which is covered at least partially by an electrically conductive layer, which extends over the respective coupling electrode (10) and which is anchored with its axial end facing the respective high voltage cable (3,4) within the plastic body (12), and
- the joint sleeve (6) which consists of an elastically deformable material is a one piece element and abuts to both plastic bodies (12).

2. Arrangement according to claim 1, **characterized in**
- **that** the ends of the two high voltage cables (3,4) which shall be connected to each other are surrounded by the plastic bodies (12) serving as barrier insulators such that their respective pressure rooms which surround the fluid insulating medium are separated from each other hydraulically, and
- **that** the two plastic bodies (8) form in connection with the outer joint sleeve (6) a voltage resistant cover for the connecting point of the two high voltage cables (3,4).

3. Arrangement according to claim 1 or 2, **characterized in that** the outerjoint sleeve (6) consists of an ethylene-propylene-terpolymer or of silicone rubber.

4. Arrangement according to one of the claims 1 to 3, **characterized in that** the axial ends of the outerjoint sleeve (6) consist of an electrically conductive ethylene-propylene-terpolymer or of silicone rubber to form control funnels (17, 18).

## Revendications

1. Ensemble pur relier deux câbles à haute tension isolés par du papier imprégné d'un isolant liquide, et dans lequel :
une fermeture d'extrémité entourée par un isolateur étanche résistant à la pression est placée aux extrémités à relier de chacun des deux câbles à haute tension (3, 4),
l'emplacement de liaison des deux conducteurs (1, 2) est entourée par un corps extérieur de manchon (6) formé d'un matériau isolant,
une électrode de blindage (5) en terpolymère d'éthylène et de propylène ou en caoutchouc au silicone rendus électriquement conducteurs est placée au-dessus de l'emplacement de liaison des conducteurs (1, 2) des deux câbles à haute tension (3, 4),
un élément métallique de raccordement (9) doté d'une surface frontale plane est fixé de manière électriquement conductrice sur les extrémités des conducteurs (1, 2) des deux câbles à haute tension (3, 4), les deux éléments de raccordement (9) reposant l'un contre l'autre par leur surface frontale lorsqu'ils sont en position de montage,
lorsqu'ils sont en position de montage, les deux éléments de raccordement (9) étant reliés l'un à l'autre de manière électriquement conductrice par une bague métallique (16) qui les entoure de manière étanche et dont la surface extérieure repose de manière étanche sur l'électrode de blindage (5),
chaque élément de raccordement (9) étant entouré par une électrode de couplage (10) de forme tubulaire qui s'étend coaxialement par rapport à lui et qui délimite avec lui un interstice périphérique,
un élément d'étanchéité (11) étant placé entre l'électrode de couplage (10) et l'élément de raccordement (9),
un corps (12) en matière synthétique servant d'isolateur étanche et dont au moins certaines parties sont dotées d'une couche électriquement conductrice, qui s'étend jusqu'au-dessus de l'électrode de couplage (10) dont l'extrémité axiale tournée vers le câble à haute tension (3, 4) respectif est ancrée dans le corps (12) en matière synthétique, est placé autour des extrémités de chacun des deux câbles à haute tension (3, 4) et
le corps (6) de manchon constitué d'un matériau élastiquement déformable est réalisé en une seule pièce et repose contre les deux corps (12) en matière synthétique.

2. Ensemble selon la revendication 1, **caractérisé en ce**
- **que** les extrémités à relier des deux câbles à haute tension (3, 4) sont entourées par les corps (12) en matière synthétique servant d'isolateurs étanches de telle sorte que leurs espaces sous pression entourant le liquide isolant soient hydrauliquement l'un de l'autre, et
- **que** les deux corps (12) en matière synthétique forment en liaison avec le corps extérieur (6) de manchon une enveloppe résistant à la pression pour l'emplacement de liaison des deux câbles à haute tension (3, 4).

3. Ensemble selon les revendications 1 ou 2, **caractérisé en ce que** le corps extérieur (6) de manchon est constitué d'un terpolymère d'éthylène et de propylène ou de caoutchouc au silicone rendus électriquement conducteurs.

4. Ensemble selon l'une des revendications 1 à 3, **caractérisé en ce que** les extrémités axiales du corps extérieur (6) de manchon sont constituées d'un terpolymère d'éthylène et de propylène ou de caoutchouc au silicone rendus électriquement conducteurs en vue de former des cônes de guidage (17, 18).
